# EUROPEAN PATENT SPECIFICATION

(11) **EP 0 467 598 B1**
(45) Date of publication and mention of the grant of the patent: **02.12.1998**
(21) Application number: 91306308.7
(22) Date of filing: 11.07.1991
(51) Int. Cl.: G06K 15/00

(54) **Image processing apparatus**
Bildverarbeitungsgerät
Système de traitement d'images

(30) Priority: 13.07.1990 JP 184339/90
(43) Date of publication of application: 22.01.1992
(73) Proprietor: CANON KABUSHIKI KAISHA, Tokyo (JP)
(72) Inventor: Shimura, Akihiro, Shimomaruko, Ohta-ku, Tokyo (JP); Ueda, Shigeru, Shimomaruko, Ohta-ku, Tokyo (JP)
(74) Representative: Beresford, Keith Denis Lewis

(56) References cited:
- EP-A- 0 012 793
- EP-A- 0 354 791
- EP-A- 0 389 298
- DE-A- 3 931 128
- GB-A- 2 225 468

## Description

### BACKGROUND OF THE INVENTION

### Field of the Invention

The invention relates to an image processing apparatus for processing image data to be printed by a printing unit.

### Related Background Art

Generally, in a printing apparatus represented by a laser beam printer or the like, pixel image data according to a resolution of a print mechanism unit is produced in an image memory by an image processing apparatus and is printed by the print mechanism unit.

To hold a pixel image of an image of a predetermined size in the image memory, however, a memory area which is specified by the resolution of the printing apparatus is necessary. Therefore, for instance, in the case of outputting the image data to a printing apparatus of a high resolution, there is a drawback such that a larger memory area is needed to keep a pixel image of an image of the same size as compared with the case of a printing apparatus of a low resolution. Such a drawback is remarkable, particularly, in the case of using a color printing apparatus or the case of executing a gradation recording.

It is a concern of the invention to provide an image processing apparatus which can meet the above drawbacks.

DE-A-3 931 128 discloses an image processing apparatus including image data generating means for generating pixel image data in accordance with input image data and for outputting the pixel image data to a printing unit, comprising:
memory means having a work area and an image memory area, the image memory area being adapted to store the generated pixel image data; said image memory area has a variable storage capacity which depends on the current usage of the work area, and wherein said image data generating means comprises means for determining the total capacity of said memory means and obtaining the available memory capacity for the image memory area according to the current work area; determining means for determining the resolution of the pixel image data to be stored in the image memory area in accordance with the obtained available image memory capacity, means for generating the pixel image data in accordance with the determined resolution; means for storing the pixel image data at the image memory area in the determined resolution; and resolution converting means for converting the resolution of the pixel image data as stored in said image memory area and read from said image memory area to correspond to the output resolution of the printing unit if the resolution of the stored pixel image data does not correspond to the output resolution of the printing unit, (i.e. said converting means being adapted to change the resolution of the pixel image data so as to be equal to the recording resolution of the printing unit).

Japanese Patent Abstract No. JP-B-5324146 discloses image processing apparatus in which the resolution of pixel image data is determined in accordance with space capacity available to store the image pixel data.

In accordance with the present invention there is provided image processing apparatus and method as set out in claims 1 and 4.

Other features, and advantages of the present invention will become apparent from the following detailed description of a preferred embodiment given in conjunction with the accompanying drawings, in which
Fig. 1 is a schematic block diagram showing a construction of a printing apparatus according to an embodiment;
Fig. 2 is a detailed block diagram showing a construction of a conversion unit shown in Fig. 1; and
Fig. 3 is a flowchart showing a processing procedure in the embodiment.

### DETAILED DESCRIPTION OF THE PREFERRED EMBODIMENTS

A preferred embodiment according to the invention will be described in detail hereinbelow with reference to the drawings.

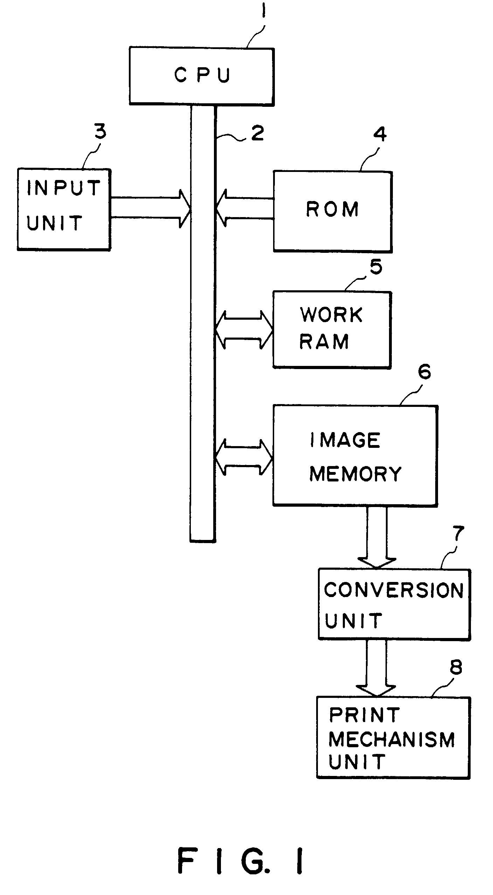

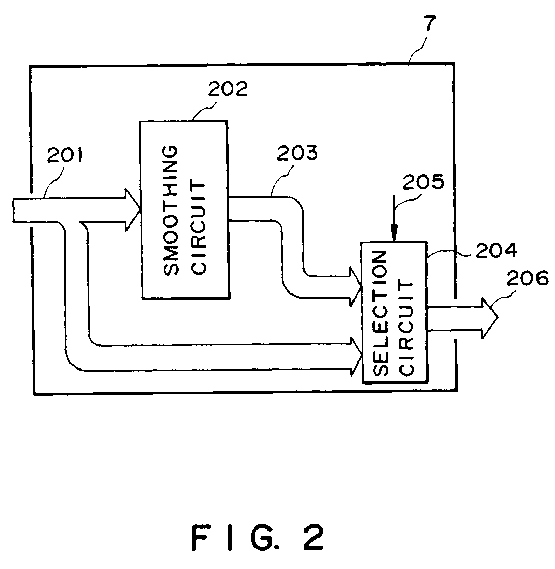

### <Description of construction (Figs. 1 and 2)>

Fig. 1 is a schematic block diagram showing a construction of a printing apparatus according to the embodiment. In the diagram, reference numeral 1 denotes a CPU to control a whole apparatus and 2 indicates a bus of the CPU 1. The bus 2 is constructed by an address bus, a data bus, and various control buses. Reference numeral 3 denotes an input unit for supplying input data which is given from a host computer or the like (not shown) to the printing apparatus and 4 indicates a ROM in which a program of the CPU 1, which will be explained hereinlater, data, pattern data of characters, figures, and the like, etc. have been stored. The ROM 4 is not limited to a ROM but a memory having a function to store a program, data, and the like can be also used. A work RAM 5 is used as a work area of the CPU 1, a memory area of the data supplied from the input unit 3, and the like.

An image memory 6 is used to draw a pixel image when pixel image data is produced. The capacity of the image memory 6 is variable. That is, the image memory 6 can be expanded. The work RAM 5 and the image memory 6 can be constructed physically by the same RAM and a capacity of the area which is used as an image memory 6 in such a RAM can be made variable or a combination of both of them may be also used. Reference numeral 8 denotes a print mechanism unit in a printing apparatus such as laser beam printer, ink jet printer, wire dot printer, or the like. The print mechanism unit 8 actually forms an image onto a paper or the like. The print mechanism unit 8 may have either a construction in which a density of pixels is variable or a construction in which an image can be printed by providing a gradation every pixel. Additionally, the print mechanism unit 8 can also have a construction in which an image can be printed by providing a color tone every pixel or a construction based on a combination of those constructions.

A conversion unit 7 converts the pixel image data produced in the image memory 6 into an output resolution of the print mechanism unit 8 and supplies the resolution to the print mechanism unit 8. The conversion unit 7 doesn't execute the conversion when the resolution of the pixel image data produced in the image memory 6 coincides with the output resolution of the print mechanism unit 8.

A construction of the above conversion unit 7 will now be described hereinbelow with reference to a block diagram shown in Fig. 2.

The conversion unit 7 in the embodiment has two kinds of pixel image data producing means which can produce pixel image data in which the pixel density is equal to 400 pixels per inch and the number of gradations per pixel is equal to 2 for the print mechanism unit 8 in which the pixel density is equal to 800 pixels per inch and the number of gradations per pixel is equal to 2, that is, which can produce a binary image and which can produce pixel image data at the same resolution as that of the print mechanism unit 8.

In Fig. 2, reference numeral 201 denotes pixel image data supplied from the image memory 6 and 202 indicates a smoothing circuit which is realized by a method disclosed in JP-B-53-24146 or the like. The smoothing circuit 202 executes an outline correction or the like to an image having a pixel density of 400 pixels/inch, thereby converting into an image having a pixel density of 800 pixels/inch. Reference numeral 203 denotes image data which has been converted by the smoothing circuit 202; 204 a selection circuit for selecting and outputting either one of the input pixel image 201 and the output 203 from the smoothing circuit 202 in accordance with a selection control signal 205, which will be explained hereinlater. Reference numeral 205 denotes the selection control signal which is controlled by the CPU 1 and is used to select either one of the two inputs 201 and 203 of the selection circuit 204. Reference numeral 206 denotes output image data which is supplied from the selection circuit 204 to the print mechanism unit 8.

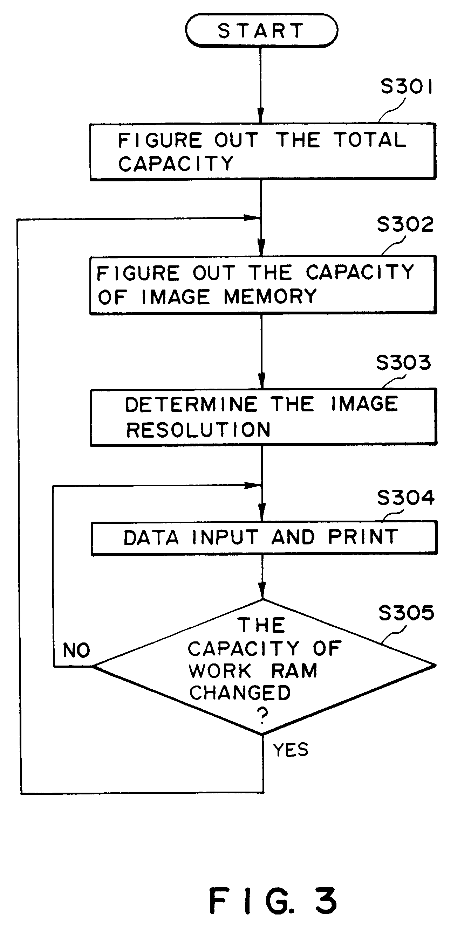

### <Description of processing procedure (Fig. 3)>

A processing procedure of the apparatus with the foregoing construction will now be described hereinbelow in accordance with a flowchart shown in Fig. 3.

In the embodiment, the case where there is no physical difference between the work RAM 5 and the image memory 6 and those memories 5 and 6 are arranged in the same RAM will now be explained as an example.

In step S301, the total capacity of the RAM is calculated. For instance, if the total capacity of the RAM is fixed, it is sufficient to set the total capacity of the RAM to a fixed value. If the total capacity of the RAM is variable, the total capacity of the RAM is calculated on the basis of read/write tests of the RAM, a sense port of the total capacity of the RAM, a combination thereof, or the like. In the next step S302, a capacity which can be used as an image memory 6 in the total capacity of the RAM obtained in step S301 is calculated. That is, the capacity which can be used as an image memory 6 is equal to the value which is obtained by subtracting the capacity of the work RAM 5 which is necessary to the work from the total capacity of the RAM.

In step S303, the resolution of an image to be generated is determined from the capacity of the image memory 6 obtained in step S302. For instance, if a memory capacity of one original of the A4 size (210 mm x 297 mm) is necessary as a capacity of the image memory 6, the resolution of the output image is determined in accordance with the capacity of the image memory 6. That is, if the capacity of the image memory 6 is equal to or less than 7.4 Mbytes, the resolution of the output image is set to 400 pixels/inch. If the capacity is equal to or larger than 7.4 Mbytes, the resolution of the output image is set to 800 pixels/inch. In the next step S304, a pixel image for the image data supplied from the input unit 3 is produced in accordance with the resolution determined in step S303 and is developed in the image memory 6.

There is generated the selection control signal 205 to select the output 203 of the smoothing circuit 202 shown in Fig. 2 in the case where the resolution decided in step S303 is equal to 400 pixels/inch or the input pixel image data 201 in the case where the resolution is equal to 800 pixels/inch. The pixel image data 206 selected by the selection control signal 205 is supplied to the print mechanism unit 8 and is printed.

After completion of the printing, in the next step S305, a check is then made to see if the capacity of the work RAM has been changed or not. Thus, for instance, if the registration, deletion, or the like of a character pattern has been executed, the processing routine is returned to step S302 and the resolution is again determined. However, if the capacity is not changed, the processing routine is returned to step S304 and the above printing processes are repeated.

As described above, the resolution of the pixel image data to be produced is decided in accordance with the memory capacity which is assigned to the pixel image data and the pixel image data can be produced and printed at the resolution decided.

### Other embodiments

In the above embodiment, the resolution which is used has been set to 400 pixels/inch and 800 pixels/ inch. However, the resolution to be used can be also set to other resolutions and is not limited to two kinds of values but can be set to a plurality of kinds of values. In this case, the apparatus is obviously changed in a manner such that the smoothing circuits and the like shown in Fig. 2 as many as the number of resolutions which are used are provided and the outputs of the smoothing circuits are supplied to the selection circuit 204.

In the above embodiment, the resolution of the print mechanism unit 8 has been fixed to 800 pixels/inch. However, the resolution can be also set to another different resolution. As a print mechanism unit 8, it is also possible to use a print mechanism unit in which a paper feeding speed, a sub-scanning speed, and the like are variable and which can print at a plurality of resolutions. In this case, the conversion unit 7 performs the storage or safekeeping and thinning-out of image data according to the set resolution in the print mechanism unit 8 and the drawing resolution to the image memory 6.

Even by the above modification, the resolution of the pixel image data to be produced is determined in accordance with the memory capacity which is assigned to the pixel image data and the produced pixel image data can be printed.

Although the case where the image memory 6 is changed according to the capacity of the work RAM 5 has been described 6, the invention can be also applied to the case where the image memory 6 is made variable by expanding the memory.

A size of image memory 6 can be set by a command from an external host computer or by a dip switch or a panel switch and a drawing resolution of the pixel image data to the image memory 6 can be also determined in accordance with the set size.

As described above, according to the invention, the pixel image data can be produced and printed at a high resolution in accordance with the capacity of the memory area.

## Claims

1. Image processing apparatus including image data generating means (CPU1) for generating pixel image data in accordance with input image data and for outputting the pixel image data to a printing unit, comprising:
memory means (5, 6) having a work area (5) and an image memory area (6), the image memory area being adapted to store the generated pixel image data;
said image memory area has a variable storage capacity which depends on the current usage of the work area, and wherein said image data generating means comprises means (S301, S302) for calculating the total capacity of the memory means and obtaining the available memory capacity for the image memory area by subtracting the current work area from the calculated total capacity of said memory means; determining means (S303) for determining the resolution of the pixel image data to be stored in the image memory area in accordance with the obtained available image memory capacity; means for storing the pixel image data at the image memory area in the determined resolution; and
resolution converting means (7) for increasing the resolution of the pixel image data read from said image memory area so that it corresponds to the output resolution of the printing unit when the pixel image data from the memory area is of smaller resolution than the recording resolution of the printing unit, said converting means comprising means for smoothing image data, and said image processing apparatus further comprising means (204) for selecting either the output of said converting and smoothing means or pixel image data read from the image memory area in dependence upon whether the determined resolution is smaller than or equal to the recording resolution of the printing unit.

2. Apparatus according to claim 1, wherein the smoothing means is adapted to execute an interpolation process on the pixel image data.

3. Apparatus according to either claim 1 or claim 2, wherein the memory capacity of said memory means can be increased by adding memory means.

4. Image processing method comprising generating pixel image data in accordance with input image data and outputting the pixel image data to a printing unit, the method comprising:
providing memory means (5, 6) having a work area (5) and an image memory area (6); and
storing the generated pixel image data in the image memory area;
the storage capacity of said image memory area is varied in dependence on the current usage of the work area, and further including the steps of calculating the total capacity of the memory means (S301) and obtaining the available memory capacity for the image memory area by subtracting the current work area from the calculated total capacity of said memory means (S302); determining (S303) the resolution of the pixel image data to be stored in the image memory area in accordance with the obtained available image memory capacity; storing the pixel image data at the image memory area in the determined resolution; and utilising resolution converting means (7) to increase the resolution of the pixel image data read from said image memory area so that it corresponds to the output resolution of the printing unit when the pixel image data from the memory area is of smaller resolution than the recording resolution of the printing unit; said converting means comprising means for smoothing image data; and selecting either the output of said converting and smoothing means or pixel image data read from the image memory area in dependence upon whether the determined resolution is smaller than or equal to the recording resolution of the printing unit.

5. A method according to claim 4, wherein the pixel image data is smoothed by an interpolation process.

6. A method according to either claim 4 or claim 5, wherein the memory capacity of said memory means is increased by adding memory means.

## Patentansprüche

1. Bildverarbeitungsgerät mit einer Bilddatenerzeugungseinrichtung (CPU1) zur Erzeugung von Bildelement-Bilddaten entsprechend eingegebenen Bilddaten und zur Ausgabe der Bildelement-Bilddaten zu einer Druckeinheit, mit
einer einen Arbeitsbereich (5) und einen Bildspeicherbereich (6) aufweisenden Speichereinrichtung (5, 6), wobei der Bildspeicherbereich zum Speichern der erzeugten Bildelement-Bilddaten angepaßt ist,
wobei der Bildspeicherbereich eine veränderliche Speicherkapazität aufweist, die von der gegenwärtigen Verwendung des Arbeitsbereichs abhängt, und die Bilddatenerzeugungseinrichtung eine Einrichtung (S301, S302) zur Berechnung der Gesamtkapazität der Speichereinrichtung und zum Erhalt der verfügbaren Speicherkapazität für den Bildbereich durch Subtraktion des gegenwärtigen Arbeitsbereichs von der berechneten Gesamtkapazität der Speichereinrichtung, eine Bestimmungseinrichtung (S303) zur Bestimmung der Auflösung der in den Bildbereich zu speichernden Bildelement-Bilddaten entsprechend der erhaltenen verfügbaren Speicherkapazität, eine Einrichtung zum Speichern der Bildelement-Bilddaten in dem Bildspeicherbereich in der vorbestimmten Auflösung sowie
eine Auflösungs-Umwandlungseinrichtung (7) aufweist, um die Auflösung der aus dem Bildspeicherbereich gelesenen Bildelement-Bilddaten derart zu vergrößern, daß diese der Ausgabeauflösung der Druckeinheit entspricht, wenn die Bildelement-Bilddaten aus dem Speicherbereich eine kleiner Auflösung als die Aufzeichnungsauflösung der Druckeinheit ist, wobei die Umwandlungseinrichtung eine Einrichtung zum Glätten der Bilddaten aufweist, und das Bildverarbeitungsgerät außerdem eine Einrichtung (204) aufweist, damit entweder des Ausgangssignal aus der Umwandlungs- und Glättungseinrichtung oder der aus dem Bildspeicherbereich gelesenen Bildelement-Bilddaten in Abhängigkeit davon ausgewählt wird, ob die bestimmte Auflösung kleiner oder gleich der Aufzeichnungsauflösung der Druckeinheit ist.

2. Gerät nach Anspruch 1, wobei die Glättungseinrichtung zur Ausführung einer Interpolationsverarbeitung an den Bildelement-Bilddaten angepaßt ist.

3. Gerät nach Anspruch 1 oder 2, wobei die Speicherkapazität der Speichereinrichtung durch Hinzufügen von Speichereinrichtungen vergrößert werden kann.

4. Bildverarbeitungsverfahren mit Erzeugung von Bildelement-Bilddaten entsprechend eingegebener Bilddaten und Ausgeben der Bildelement-Bilddaten zu einer Druckeinheit, mit den Schritten
Vorsehen einer Speichereinrichtung (5, 6) mit einem Arbeitsbereich (5) und einem Bildspeicherbereich (6) sowie
Speichern der erzeugten Bildelement-Bilddaten in den Bildspeicherbereich,
wobei die Speicherkapazität des Bildspeicherbereichs in Abhängigkeit von der gegenwärtigen Verwendung des Arbeitsbereichs variiert wird, und das Verfahren die Schritte Berechnen der Gesamtkapazität der Speichereinrichtung (S301) und Erhalten der verfügbaren Speicherkapazität für den Bildspeicherbereich durch Subtrahieren des gegenwärtigen Speicherbereichs von der berechneten Gesamtkapazität der Speichereinrichtung (S302), Bestimmen (S303) der Auflösung der in dem Bildspeicherbereich zu speichernden Bildelement-Bilddaten entsprechend der erhaltenen verfügbaren Bildspeicherkapazität, Speichern der Bildelement-Bilddaten in den Bildspeicherbereich in der vorbestimmten Auflösung und Verwenden einer Auflösungs-Umwandlungseinrichtung (7) zur Vergrößerung der Umwandlung der aus dem Bildspeicherbereich ausgelesenen Bildelement-Bilddaten derart, daß diese der Ausgabeauflösung der Druckeinheit entspricht, wenn die Auflösung der Bildelement-Bilddaten aus dem Speicherbereich kleiner als die Aufzeichnungsauflösung der Druckeinheit ist, wobei die Umwandlungseinrichtung eine Einheit zum Glätten der Bilddaten aufweist, und Auswählen entweder des Ausgangssignals der Umwandlungs- und Glättungseinrichtung oder der aus dem Bildspeicherbereich gelesenen Bildelement-Bilddaten in Abhängigkeit davon vorgesehen sind, ob die vorbestimmte Auflösung kleiner oder gleich der Aufzeichnungsauflösung der Druckeinheit ist, aufweist.

5. Verfahren nach Anspruch 4, wobei die Bildelement-Bilddaten durch eine Interpolationsverarbeitung geglättet werden.

6. Verfahren nach Anspruch 4 oder 5, wobei die Speicherkapazität der Speichereinrichtung durch Hinzufügen von Speichereinrichtungen erhöht wird.

## Revendications

1. Appareil de traitement d'image comportant un moyen (CPU1) de génération de données d'image pour générer des données d'image de pixel en fonction de données d'image d'entrée et pour délivrer les données d'image de pixel à une unité d'impression, comprenant :
un moyen (5, 6) formant mémoire comportant une zone de travail (5) et une zone (6) de mémoire d'image, la zone de mémoire d'image étant apte à stocker les données d'image de pixel générées ;
ladite zone de mémoire d'image a une capacité variable de stockage qui dépend de l'usage courant de la zone de travail, et ledit moyen de génération de données d'image comprenant un moyen (S301, S302) pour calculer la capacité totale du moyen formant mémoire et obtenir la capacité disponible de mémoire pour la zone de mémoire d'image en soustrayant la zone de travail en cours de la capacité totale calculée dudit moyen formant mémoire ; un moyen (S303) de détermination pour déterminer la définition des données d'image de pixel à stocker dans la zone de mémoire d'image en fonction de la capacité disponible obtenue de mémoire d'image ; un moyen pour stocker les données d'image de pixel au niveau de la zone de mémoire d'image dans la définition déterminée ; et
un moyen (7) de conversion de définition pour accroître la définition des données d'image de pixel lues à partir de ladite zone de mémoire d'image, de manière qu'elle corresponde à la définition de sortie de l'unité d'impression lorsque les données d'image de pixel en provenance de la zone de mémoire sont de définition inférieure à la définition d'enregistrement de l'unité d'impression, ledit moyen de conversion comprenant un moyen pour lisser des données d'image, et ledit appareil de traitement d'image comprenant en outre un moyen (204) pour sélectionner, soit la sortie dudit moyen de conversion et de lissage, soit des données d'image de pixel lues à partir de la zone de mémoire d'image en fonction du fait que la définition déterminée est inférieure ou égale à la définition d'enregistrement de l'unité d'impression.

2. Appareil selon la revendication 1, dans lequel le moyen de lissage est apte à exécuter un processus d'interpolation sur les données d'image de pixel.

3. Appareil selon l'une de la revendication 1 ou de la revendication 2, dans lequel la capacité de mémoire dudit moyen formant mémoire peut être accrue par addition d'un moyen formant mémoire.

4. Procédé de traitement d'image comprenant la génération de données d'image de pixel en fonction de données d'image d'entrée, et la délivrance des données d'image de pixel à une unité d'impression, le procédé comprenant :
la fourniture d'un moyen (5, 6) formant mémoire comportant une zone de travail (5) et une zone (6) de mémoire d'image ; et
le stockage des données d'image de pixel générées dans la zone de mémoire d'image ;
la capacité de stockage de ladite zone de mémoire d'image variant en fonction de l'usage courant de la zone de travail, et comportant en outre les étapes de calcul de la capacité totale du moyen (S301) formant mémoire et d'obtention de la capacité disponible de mémoire pour la zone de mémoire d'image en soustrayant la zone de travail en cours de la capacité totale calculée dudit moyen (S302) formant mémoire ; de détermination (S303) de la définition des données d'image de pixel à stocker dans la zone de mémoire d'image en fonction de la capacité disponible obtenue de mémoire d'image ; de stockage des données d'image de pixel au niveau de la zone de mémoire d'image dans la définition déterminée ; et d'utilisation du moyen (7) de conversion de définition pour accroître la définition des données d'image de pixel lues à partir de ladite zone de mémoire d'image de manière qu'elle corresponde à la définition de sortie de l'unité d'impression lorsque les données d'image de pixel en provenance de la zone formant mémoire sont d'une définition inférieure à la définition d'enregistrement de l'unité d'impression ; ledit moyen de conversion comprenant un moyen pour lisser des données d'image ; et de sélection, soit de la sortie dudit moyen de conversion et de lissage, soit de données d'image de pixel lues à partir de la zone de mémoire d'image en fonction du fait que la définition déterminée est inférieure ou égale à la définition d'enregistrement de l'unité d'impression.

5. Procédé selon la revendication 4, dans lequel les données d'image de pixel sont lissées par un processus d'interpolation.

6. Procédé selon l'une de la revendication 4 ou de la revendication 5, dans lequel la capacité de mémoire dudit moyen formant mémoire est accrue par l'addition d'un moyen formant mémoire.
